# EUROPÄISCHE PATENTSCHRIFT

(11) **EP 1 470 458 B1**
(45) Veröffentlichungstag und Bekanntmachung des Hinweises auf die Patenterteilung: **02.03.2011**
(21) Anmeldenummer: 02777073.4
(22) Anmeldetag: 12.09.2002
(51) Int. Cl.: G05B 19/416

(54) **VERFAHREN ZUR BAHNSTEUERUNG**
METHOD FOR CONTINUOUS-PATH CONTROL
PROCEDE DE COMMANDE CONTINUE

(30) Priorität: 04.10.2001 DE 10149175
(43) Veröffentlichungstag der Anmeldung: 27.10.2004
(73) Patentinhaber: Dr. Johannes Heidenhain GmbH, 83292 Traunreut (DE)
(72) Erfinder: HAUNERDINGER, Josef, 83377 Vachendorf (DE); ZACEK, Johann, 83552 Evenhausen (DE); BRADER, Anton, 83119 Obing (DE); RAUTH, Michael, 83301 Traunreut (DE)
(86) Internationale Anmeldenummer: PCT/EP2002/010227
(87) Internationale Veröffentlichungsnummer: WO 2003/032098

(56) Entgegenhaltungen:
- EP-A- 0 480 046
- EP-A- 0 864 952
- US-A- 5 371 452
- US-A- 5 394 513
- US-A- 5 434 489
- US-A- 5 475 602
- US-A- 5 545 959
- US-A- 6 084 374
- ANONYMOUS: 2000' CATALOG NUM 1020/1040/1050/1060 CNCS NUM DRIVES AND MOTORS, [Online] 31. Juli 2000 (2000-07-31), XP002263030 Gefunden im Internet: <URL:http://www.num.fr/us/cat/cat2000gb.pd f> [gefunden am 2003-11-27]
- ANONYMOUS: "DEFINITION OF A TIME CONSTANT" TECHNUM - THE TECHNICAL JOURNAL OF CNCS AND DRIVES, [Online] Nr. 2, 31. Dezember 1996 (1996-12-31), Seite 13 XP002263031 ISSN: 12702730 Gefunden im Internet: <URL:http://www.num.it/download/biblio/tec h2gb.pdf > [gefunden am 2003-11-27]

## Beschreibung

Die Erfindung betrifft ein Verfahren zur Bahnsteuerung nach Anspruch 1.

In modernen Werkzeugmaschinen werden Numerische Steuerungen eingesetzt, um die Positionierung und Bewegung von Werkzeugen relativ zu einem Werkstück zu kontrollieren. Um ein Werkstück entsprechend einer Vorgabe zu bearbeiten, ist es notwendig, das Werkzeug relativ zum Werkstück auf vorher festgelegten Bahnen zu bewegen. Man spricht daher auch von einer Bahnsteuerung. Die Festlegung der gewünschten Bahnen erfolgt in einem Teileprogramm, das durch die Numerische Steuerung abgearbeitet wird. Die Numerische Steuerung setzt dabei die geometrischen Anweisungen des Teileprogramms in Anweisungen an die Lageregelung der verschiedenen Achsen der Werkzeugmaschine um.

In einem solchen Teileprogramm werden beispielsweise beliebige Werkzeugbahnen durch Stützpunkte angenähert, zwischen denen die Bahnsteuerung linear interpoliert. In modernen Werkzeugmaschinen wie einer 5-Achs-Fräsmaschine stehen mehrere Bewegungsachsen zur Verfügung, auf die die gewünschte Bahn projiziert werden kann. Die Vorgabe für jede Bewegungsachse besteht dann wiederum aus Stützpunkten (Achspositionen), die nacheinander und synchron von jeder Achse angefahren werden müssen. Dies gilt sowohl für Linearachsen als auch für Winkelachsen.

Da eine Werkzeugmaschine bestimmten Einschränkungen hinsichtlich der maximalen Beschleunigung und auch des maximalen Rucks (Änderung der Beschleunigung) in seinen Bewegungsachsen unterliegt, kann eine im Teileprogramm vorgesehen Ecke zwischen zwei Bahnabschnitten der Werkzeugbahn nicht mit einer endlichen Geschwindigkeit exakt durchlaufen werden, da hierzu eine unendliche Beschleunigung notwendig wäre. Die maximale Geschwindigkeit, mit der eine Ecke durchlaufen werden kann, hängt daher von der maximal zulässigen Toleranz ab, mit der die tatsächliche Werkzeugbahn von der idealen Werkzeugbahn abweichen darf. Je größer diese Toleranz, desto höher ist die mögliche Geschwindigkeit. Eine im Teileprogramm festgelegte Ecke wird dabei mit zunehmender Geschwindigkeit immer stärker verrundet.

Ähnliche Beschränkungen gelten auch bei der Abarbeitung eines einzelnen Bahnabschnittes, für den jede Achse von einem Startpunkt (Projektion des ersten Stützpunktes) zu einem Endpunkt (Projektion des zweiten Stützpunktes) bewegt werden muß. Üblicherweise ist für diese Bewegung eine Geschwindigkeit vorgegeben. Da aber ein Geschwindigkeitssprung am Startpunkt eines Bahnabschnittes mit unendlicher Beschleunigung verbunden wäre, muß eine Verrundung des Geschwindigkeitsprofils erfolgen. Diese Verrundung kann durch eine Filterung des Geschwindigkeitsprofils mit FIR - Filtern erfolgen, wie es beispielsweise in der EP 864952 A1 beschrieben ist. Da sich jede Bahn aus der Überlagerung aller Achsbewegungen zusammensetzt, muß die Filterung der einzelnen Bahnabschnitte so erfolgen, daß alle Sprünge in der Geschwindigkeit in gleicher Weise geglättet werden. Nur so ist eine synchrone Geschwindigkeits- bzw. Beschleunigungsführung für jede der Achsen gewährleistet, die zur Einhaltung der vorgegeben Werkzeugbahn führt.

Nachteilig am beschriebenen Verfahren der Bahnsteuerung ist, daß in Werkzeugmaschinen mit mehreren Achsen jeweils die Achsen mit der schlechtesten Dynamik (also z.B. geringster maximaler Beschleunigung) die Geschwindigkeitsführung vorgeben. Dynamischer Achsen müssen auf die jeweils langsamste Achse, die an einem Bahnabschnitt beteiligt ist, warten. Oft handelt es sich bei solchen weniger dynamischen Achsen um die Winkelachsen einer Werkzeugmaschine. Es kommt hinzu, daß im Falle einer Limitierung durch eine Winkelachse diese selbst am Limit betrieben wird. Dies führt zu einer Beeinträchtigung der Oberflächenqualität des bearbeiteten Werkstückes, da die Winkelachse in diesem Fall die ihr erlaubte Bahnabweichung voll ausnützt.

Es ist daher Aufgabe der Erfindung, ein Verfahren zur Bahnsteuerung anzugeben, das eine verbesserte Oberflächenqualität des bearbeiteten Werkstückes liefert oder kürzere Bearbeitungszeiten erlaubt.

Diese Aufgabe wird gelöst durch ein Verfahren nach Anspruch 1. Vorteilhafte Details des Verfahrens ergeben sich aus den von Anspruch 1 abhängigen Ansprüchen.

Es wurde erkannt, daß die Stellung einer Winkelachse auf die Position eines Werkzeuges relativ zu einem auf einer Werkzeugmaschine aufgespannten Werkstück dann keine Rolle spielt, wenn eine in vielen modernen Werkzeugmaschinen vorhandene Werkzeuglagekorrektur aktiviert ist. Diese Werkzeuglagekorrektur, üblicherweise auch als RTCP-Einheit (Rotating Tool Center Point) bezeichnet, sorgt dafür, daß bei einer Bewegung in einer Winkelachse die Linearachsen so nachgeführt werden, daß der Eingriffspunkt des Werkzeuges am Werkstück erhalten bleibt.

Erfindungsgemäß wird nun eine getrennte Geschwindigkeitsführung für Winkelachsen und Linearachsen vorgenommen. Dies wird beispielsweise dadurch erzielt, daß für die Verrundung der Geschwindigkeitsprofile der Winkelachsen weichere Filter verwendet werden als für die Verrundung der Geschwindigkeitsprofile der Linearachsen. Dadurch treten in den Winkelachsen geringere Beschleunigungen (und höhere Ableitungen der Geschwindigkeitsprofile) auf, die Abweichungen des Regelkreises der Winkelachsen werden kleiner, wodurch wiederum die Oberflächenqualität des bearbeiteten Werkstückes steigt. Um dennoch die notwendige Bahntreue zu erhalten, muß die RTCP-Einheit eine Ausgleichsbewegung in den Linearachsen so steuern, daß sich der Eingriffspunkt des Werkzeuges am Werkstück gegenüber einer synchronen Geschwindigkeitsführung nicht ändert. Bei entsprechender Parametrisierung läßt sich der Effekt der verbesserten Oberflächengüte ganz oder teilweise zugunsten einer höheren Bearbeitungsgeschwindigkeit verschieben.

Weitere Vorteile sowie Einzelheiten der vorliegenden Erfindung ergeben sich aus der nachfolgenden Beschreibung anhand der Figuren. Dabei zeigt
- Figur 1: eine Werkzeugmaschine mit Numerischer Steuerung,
- Figur 2a,: b eine Werkzeugbahn in zwei Ansichten,
- Figur 3a,b: ein Positionsprofil für zwei Achsen, und
- Figur 4a,: b ein Geschwindigkeitsprofil für zwei Achsen.

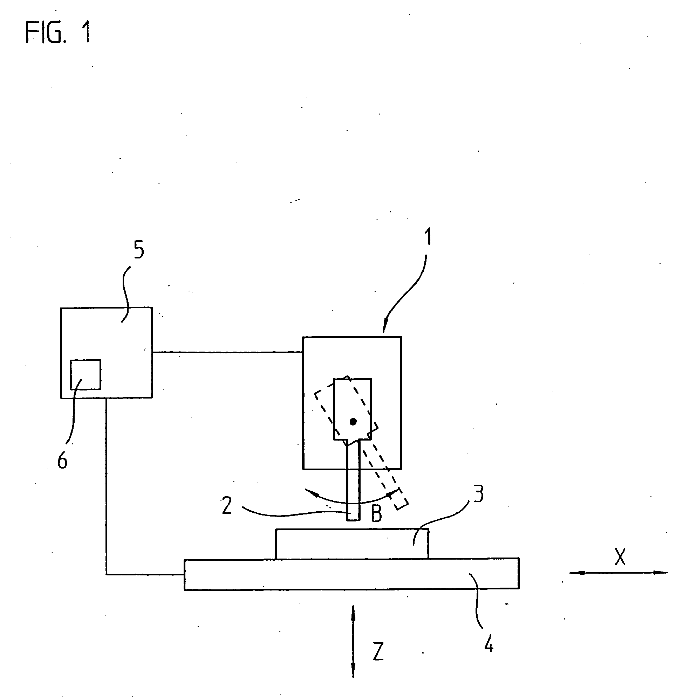

In Figur 1 erkennt man eine Werkzeugmaschine 1 mit einem Werkzeug 2. Auf einem Bearbeitungstisch 4 ist ein Werkstück 3 aufgespannt. Werkstück 3 und Werkzeug 2 sind gegeneinander in mehreren Achsen bewegbar. So sind in der Zeichnung Linearachsen in X- und Z-Richtung zu erkennen, eine dritte Linearachse in γ-Richtung steht senkrecht auf der Zeichenebene. In einer 5-Achs-Fräsmaschine gibt es dazu noch zwei Winkelachsen, von denen in Figur 1 die B-Achse dargestellt ist. Das Werkzeug 2 ist um die Richtung der γ-Achse schwenkbar. Eine zweite Winkelachse A entsteht, wenn der Bearbeitungstisch 4 um die X-Achse verkippt werden kann. Die Steuerung der Achsen X, Y, Z, A, B erflogt mittels einer Numerischen Steuerung 5, die beispielsweise ein Teileprogramm abarbeiten oder einzelne Befehle vom Bediener der Werkzeugmaschine entgegennehmen und ausführen kann.

Wie man in Figur 1 leicht erkennen kann, führt eine Bewegung des Werkzeuges 2 um die Winkelachse B zu einer Verschiebung der Spitze des Werkzeugs 2 gegenüber dem Werkstück 3. Um die Programmierung einer Werkstückbearbeitung in mehreren Achsen X, Y, Z, A, B mit wenigstens einer Winkelachse A, B zu vereinfachen, muß vom Programmierer lediglich die gewünschte Bahn der Spitze des Werkzeuges 2 und die Werkzeugrichtung vorgegeben werden, die Sollpositionen der Winkelachsen A, B werden dann automatisch berechnet. Eine RTCP-Einheit 6 der Numerischen Steuerung 5 stellt dabei sicher, daß bei einer Bewegung in einer Winkelachse A, B die Linearachsen X, Y, Z so nachgefahren werden, daß der Eingriffspunkt des Werkzeuges 2 am Werkstück 3 auf der vorgegebenen Bahn gehalten wird, es ändert sich lediglich die Richtung des Werkzeugs 2 relativ zum Werkstück 3. Zur Korrektur des Eingriffspunktes bei der Bewegung um eine Winkelachse B sind wenigstens zwei Linearachsen X, Z notwendig. Die Erfindung läßt sich daher nur an Werkzeugmaschinen mit wenigstens einer Winkelachse A, B und wenigstens zwei Linearachsen X, Y, Z sinnvoll einsetzen.

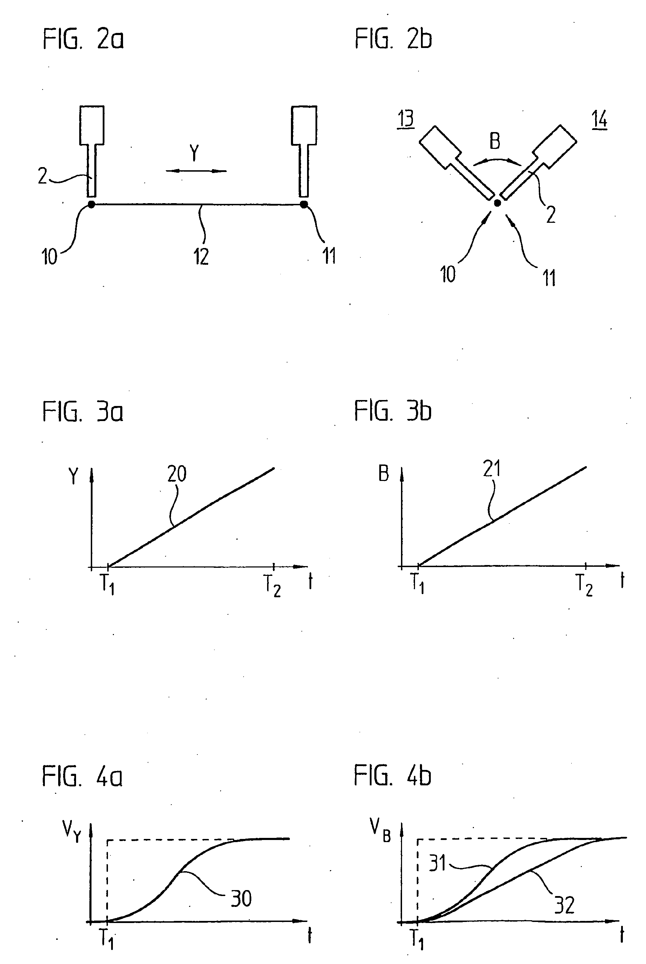

Anhand der Figuren 2a und 2b sei ein sehr einfaches Beispiel für eine in einem Teileprogramm für eine Numerische Steuerung 5 vorgegebene Bewegung zwischen Werkzeug 2 und Werkstück 3 in zwei Achsen Y und B dargestellt. Vom Programmierer (oder von einem Interpolator in der Numerischen Steuerung 5, der eine vom Programmierer vorgegebene Bahn durch Stützpunkte annähert) ist ein Startpunkt 10 und ein Endpunkt 11 vorgegeben, zwischen denen das Werkzeug 2 bezüglich der γ-Achse einen Bahnabschnitt 12 mit einer vorgegebenen Geschwindigkeit bearbeiten soll. Gleichzeitig ist eine Änderung der Werkzeugrichtung vorgegeben. Von einer Anfangsstellung 13 soll das Werkzeug in eine Endstellung 14 um die Winkelachse B schwenken. Dabei liegt zum Zeitpunkt T1 am Startpunkt 10 die Anfangsstellung 13 und zum Zeitpunkt T2 am Endpunkt 11 die Endstellung 14 vor. Da sich die Spitze des Werkzeuges 2 während des Schwenks von Stellung 13 nach Stellung 14 z.B. in der Z-Achse bewegt, muß der Bearbeitungstisch 4 eine entsprechende Ausgleichsbewegung in der Linearachse Z vollziehen, ebenso ist eine Ausgleichsbewegung der Linearachse X notwendig. Diese Aufgabe wird von der RTCP-Einheit 6 in der Numerischen Steuerung 5 übernommen. In Figur 2b ist daher die Winkelachse B in die Werkzeugspitze verschoben dargestellt.

Figur 3a stellt die vom Programmierer in der X-Achse vorgegebene Linearbewegung 20 dar. Zwischen Startpunkt 10 und Endpunkt 11 wird eine lineare interpolation vorgenommen, was zunächst einer Bewegung mit konstanter Geschwindigkeit entspricht, wie sie in Figur 4a gestrichelt dargestellt ist. Analog stellt Figur 3b die vom Programmierer in der B-Achse vorgegebene Winkelbewegung 21 dar: zwischen Anfangsstellung 13 und Endstellung 14 wird eine lineare Interpolation vorgenommen, was zunächst einer Drehung mit konstanter Geschwindigkeit entspricht, wie sie in Figur 4b gestrichelt dargestellt ist. Es sei an dieser Stelle angemerkt, daß üblicherweise schon bei der Programmierung einer Werkzeugbahn darauf geachtet wird, solche Sprünge in der Geschwindigkeit zu vermeiden. Anhand dieses vereinfachten Beispiels läßt sich die Erfindung jedoch leicht darstellen.

Da aber ein Sprung in der Geschwindigkeit bzw. Winkelgeschwindigkeit, wie er in Figur 4a bzw. 4b dargestellt ist, nicht möglich ist (die maximale Beschleunigung ist für jede Achse begrenzt!), muß das Geschwindigkeitsprofil der Figuren 4a und 4b so verrundet werden, daß keine nicht stetig differenzierbaren Bereiche (Sprünge, Knicke) mehr auftreten. Dies kann etwa mittels Filtern erfolgen, wie sie in der Eingangs erwähnten EP 864952 A1 beschrieben sind. Gibt man den Sprung in der Geschwindigkeit für jede der Achsen durch einen solchen Filter, entsteht eine Vorgabe für die gefilterte Linearbewegung 30 bzw. die gefilterte Winkelbewegung 31. Dabei wurde im Stand der Technik darauf geachtet, die Verrundung der Geschwindigkeitsprofile für alle Achsen X, Y, Z, A, B in gleichem Maße durchzuführen, um eine synchrone Bewegung aller Achsen zu erhalten. Man kann dies auch als synchrone Geschwindigkeitsführung für alle Achsen bezeichnen. Dies hatte zur Folge, daß die Verrundung des Geschwindigkeitsprofils immer so erfolgen mußte, daß die Achse mit der kleinsten maximalen Beschleunigung (oder auch die mit dem kleinsten maximalen Ruck) nicht überlastet wurde. Die Dynamik der übrigen Achsen wurde daher nicht ausgenutzt.

Da aber üblicherweise gerade die Winkelachsen A, B weniger dynamisch sind als die Linearachsen X, Y, Z, wird nun vorgeschlagen, statt der synchronen Geschwindigkeitsführung für alle Achsen X, Y, Z, A, B eine getrennte Geschwindigkeitsführung für Winkelachsen A, B und Linearachsen X, Y, Z anzuwenden. Geschwindigkeitssprünge in den Winkelachsen A, B sollen nun stärker verrundet werden als Geschwindigkeitssprünge in den Linearachsen X, Y, Z. Hierfür wird etwa das Geschwindigkeitsprofil der Winkelachsen A, B über andere, vorzugsweise weicherer Filter geglättet als das Geschwindigkeitsprofil der Linearachsen X, Y, Z. Dies kann über eine unterschiedliche Parametrisierung eines Filtertyps (z.B. Tiefpaß - Filter) oder über unterschiedliche Filtertypen (z.B. harter Tiefpaß - Filter für Linearachsen X, Y, Z und weicher Dreiecksfilter für Winkelachsen A, B) geschehen.

In Figur 4b stellt die Kurve 32 das Geschwindigkeitsprofil der Winkelachse B nach einer entsprechend weicheren Filterung dar. Man erkennt, daß nun geringere Beschleunigungen auftreten als bei synchroner Geschwindigkeitsführung nach Kurve 31. Es ergibt sich eine Verbesserung der Oberflächenqualität des Werkstückes 3, da sich durch die bei der getrennten Geschwindigkeitsführung in den Winkelachsen A, B auftretende niedrigere Beschleunigung eine bessere Bahntreue ergibt. Die Winkelachse B kann nämlich eine Sollbahn nach Kurve 32 besser einhalten als eine Sollbahn nach Kurve 31.

Es läßt sich aber auch eine Geschwindigkeitssteigerung erzielen, wenn man die Tatsache ausnützt, daß die Winkelachsen A, B nun eine "Beschleunigungsreserve" aufweisen. Erhöht man die vorgegebene Bahngeschwindigkeit insgesamt, kommen zwar die Winkelachsen A, B wieder näher an ihr Limit, aber insgesamt werden alle Achsen X, Y, Z, A, B nun schneller vom Startpunkt 10 zum Endpunkt 11 gelangen. Es steht dem Programmierer eines Teileprogramms frei, welchen der beiden Effekte er bevorzugt nutzen möchte. Eine Möglichkeit, den Effekt der getrennten Geschwindigkeitsführung in die eine oder andere Richtung zu beeinflussen besteht darin, das Maß der Verrundung eines Geschwindigkeitsprofils für Linearachsen X, Y, Z und Winketachsen A, B getrennt vorzugeben, also z.B. die Filterparameter entsprechend zu setzen. So könnte man getrennt für den Filter für die Linearachsen X, Y, Z und den Filter für die Winkelachsen A, B Toleranzen vorgeben, die eine maximale Abweichung von der vom Programmierer vorgegebenen Linearbewegung 20 bzw. Winkelbewegung 21 festlegen. Je größer diese Toleranz vorgegeben wird, desto weicher verhält sich der jeweilige Filter und desto stärker wird das jeweilige Geschwindigkeitsprofil verrundet.

Wesentlich für das erfindungsgemäße Verfahren zur Bahnsteuerung mit getrennter Geschwindigkeitsführung ist, daß trotz nicht mehr synchroner Bewegung zwischen den Linearachsen X, Y, Z und Winkelachsen A, B der Eingriffspunkt des Werkzeuges 2 am Werkstück 3 unverändert, d.h. auf der vom Programmierer ursprünglich vorgegebenen Bahn bleibt. An der Maßhaltigkeit des Werkstückes ändert sich so nichts. Der in der Figur 4b erkennbare Unterschied zwischen den Kurven 31 (synchrone Geschwindigkeitsführung) und 32 (getrennte Geschwindigkeitsführung) stellt die Abweichung der Winkelachse B von der synchronen Geschwindigkeitsführung dar. Diese Abweichung muß also über Ausgleichsbewegungen in den Linearachsen X, Y, Z korrigiert werden, um eine resultierende Bahn der Spitze des Werkzeuges 2 relativ zum Werkstück 3 zu erhalten, die der der synchronen Geschwindigkeitsführung entspricht. Diese Aufgabe kann von der RTCP-Einheit 6 übernommen werden.

Es müssen lediglich die Linearachsen X, Y, Z synchron bewegt werden, während die Winkelachsen A, B mit einer getrennten Geschwindigkeitsführung gesteuert werden können. Die RTCP-Einheit 6 berücksichtigt die von der synchronen Sollpositionen abweichenden Positionen des Werkzeuges 2 und hält den Eingriffspunkt des Werkzeuges 2 am Werkstück 3 auf der Sollbahn.

Die obigen Betrachtungen wurden anhand einer begrenzten Beschleunigung in den Winkelachsen durchgeführt. Es wurde von einer Geschwindigkeitsführung gesprochen. Natürlich sind auch den höheren Ableitungen der Werkzeugbahn Grenzen gesetzt, z.B. der maximalen Änderung der Beschleunigung, also dem Ruck. So sind nicht nur Sprünge in der Geschwindigkeit unmöglich, sondern auch Knicke. Es muß also auch ein Knick in der Geschwindigkeit verrundet werden. Da sich diese Größen aber bis auf Konstanten jeweils gegenseitig bestimmen, gelten die Betrachtungen auch für eine Begrenzung durch den maximalen Ruck. In diesem Sinn kann dann auch von einer synchronen bzw. getrennten Beschleunigungsführung gesprochen werden.

Die Vorgabe der Bewegung zwischen Werkzeug (2) und Werkstück (3) kann auch durch andere Verfahren als im Beispiel beschrieben vorgenommen werden. So ist es in modernen Numerischen Steuerungen (5) möglich, Teileprogramme mit Splines oder NURBS zu programmieren, durch die gekrümmte Bahnen ohne Sprünge im Geschwindigkeits- oder Beschleunigungsprofil vorgegeben werden können. Auch hier werden letztlich Geschwindigkeitsprofile (oder Beschleunigungsprofile) vorgegeben, deren Abarbeitung erfindungsgemäß mit einer getrennten Geschwindigkeitsführung für Linearachsen X, Y, Z und Winkelachsen A, B erfolgen kann.

## Patentansprüche

1. Verfahren zur Bahnsteuerung in wenigstens zwei Linearachsen (X, Y, Z) und wenigstens einer Winkelachse (A, B), bei dem die Bewegung eines Werkzeuges (2) gegenüber einem Werkstück (3) durch ein Teileprogramm für eine Numerische Steuerung (5) vorgegeben wird, wobei die Geschwindigkeitsführung in der Numerischen Steuerung (5) getrennt für die Linearachsen (X, Y, Z) und die Winkelachsen (A, B) vorgenommen wird **dadurch gekennzeichnet** indem Geschwindigkeitsprofile in den Winkelachsen (A, B) stärker verrundet werden als Geschwindigkeitsprofile in den Linearachsen (X, Y, Z), wobei durch die getrennte Geschwindigkeitsführung entstehende Abweichungen der Bewegung zwischen Werkzeug (2) und Werkstück (3) durch Ausgleichsbewegungen der Linearachsen (X, Y, Z) korrigiert werden, so dass bei einer gegebenen Abweichung der Winkelachsen (A, B) von einer synchronen Geschwindigkeitsführung aller Achsen (X, Y, Z, A, B) der Eingriffspunkt des Werkzeuges (2) am Werkstück (3) konstant bleibt.

2. Verfahren nach Anspruch 1, wobei zur Verrundung von Geschwindigkeitsprofilen in den Winkelachsen (A, B) weichere Filter als zur Verrundung von Geschwindigkeitsprofilen in den Linearachsen (X, Y, Z) eingesetzt werden.

3. Verfahren nach Anspruch 2, wobei zur Verrundung von Geschwindigkeitsprofilen in den Winkelachsen (A, B) Dreiecksfilter eingesetzt werden.

4. Verfahren nach Anspruch 2 oder 3, wobei zur Verrundung von Geschwindigkeitsprofilen in den Linearachsen (X, Y, Z) Tiefpaß - Filter ein-gesetzt werden.

5. Verfahren nach einem der vorhergehenden Ansprüche, wobei ein Maß für die Verrundung für Geschwindigkeitsprofile für die Winkel achsen (A, B) und die Linearachsen (X, Y, Z) getrennt vorgegeben wird.

6. Verfahren nach Anspruch 5, wobei für die Winkelachsen (A, B) und die Linearachsen (X, Y, Z) jeweils eigene Toleranzen für die Verrundung von Geschwindigkeitsprofilen vorgegeben werden.

7. Verfahren nach Anspruch 5, wobei für die Winkelachsen (A, B) und die Linearachsen (X, Y, Z) jeweils unterschiedliche Filterparameter für die Verrundung von Geschwindigkeitsprofilen vorgegeben werden.

## Claims

1. A method for the continuous path control in at least two linear axes (X, Y, Z) and at least one angular axis (A, B), in which the movement of a tool (2) relative to a work piece (3) is defined by a part program for a numerical control (5), wherein the speed control is carried out separately for the linear axes (X, Y, Z) and the angular axes (A, B) in the numerical control (5), **characterized in that** speed profiles in the angular axes (A, B) are rounded more significantly than speed profiles in the linear axes (X, Y, Z), wherein deviations of the movement between the tool (2) and the work piece (3) caused by the separate speed control are corrected with compensation movements of the linear axes (X, Y, Z) such that the point of engagement of the tool (2) on the work piece (3) remains constant at a given deviation of the angular axes (A, B) from a synchronous speed control of all axes (X, Y, Z, A, B).

2. The method according to Claim 1, wherein softer filters are used for rounding speed profiles in the angular axes (A, B) than for rounding speed profiles in the linear axes (X, Y, Z).

3. The method according to Claim 2, wherein a triangular filter is used for rounding speed profiles in the angular axes (A, B).

4. The method according to Claim 2 or 3, wherein lowpass filters are used for rounding speed profiles in the linear axes (X, Y, Z).

5. The method according to one of the preceding claims, wherein a quantity for rounding speed profiles in the angular axes (A, B) and the linear axes (X, Y, Z) is specified separately.

6. The method according to Claim 5, wherein separate tolerances are respectively specified for rounding speed profiles in the angular axes (A, B) and the linear axes (X, Y, Z).

7. The method according to Claim 5, wherein different filter parameters are respectively specified for rounding speed profiles in the angular axes (A, B) and the linear axes (X, Y, Z).

## Revendications

1. Procédé de contrôle de trajectoire dans au moins deux axes linéaires (X, Y, Z) et au moins un axe angulaire (A, B), dans lequel le mouvement d'un outil (2) par rapport à une pièce usinée (3) est prescrit par un programme de pièces pour commande numérique (5), le guidage de vitesse étant effectué dans la commande numérique (5) séparément pour les axes linéaires (X, Y, Z) et les axes angulaires (A, B), **caractérisé en ce que** les profils de vitesse dans les axes angulaires (A, B) sont arrondis plus fortement que les profils de vitesse dans les axes linéaires (X, Y, Z), les écarts de mouvement entre l'outil (2) et la pièce usinée (3) dus au guidage de vitesse séparé étant corrigés par des mouvements d'équilibrage des axes linéaires (X, Y, Z), de sorte que, en cas d'écart donné des axes angulaires (A, B) par rapport à un guidage de vitesse synchrone de tous les axes (X, Y, Z, A, B), le point d'attaque de l'outil (2) sur la pièce usinée (3) reste constant.

2. Procédé selon la revendication 1, dans lequel, pour arrondir les profils de vitesse dans les axes angulaires (A, B), on utilise des filtres autres que ceux utilisés pour arrondir les profils de vitesse dans les axes linéaires (X, Y, Z).

3. Procédé selon la revendication 2, dans lequel, pour arrondir les profils de vitesse dans les axes angulaires (A, B), on utilise des filtres triangulaires.

4. Procédé selon la revendication 2 ou 3, dans lequel, pour arrondir les profils de vitesse dans les axes linéaires (X, Y, Z), on utilise des filtres passe-bas.

5. Procédé selon une des revendications précédentes, dans lequel une cote est prescrite séparément pour arrondir les profils de vitesse pour les axes angulaires (A, B) et les axes linéaires (X, Y, Z).

6. Procédé selon la revendication 5, dans lequel des tolérances propres sont respectivement prescrites pour les axes angulaires (A, B) et les axes linéaires (X, Y, Z) pour arrondir les profils de vitesse.

7. Procédé selon la revendication 5, dans lequel des paramètres de filtres différents sont respectivement prescrits pour les axes angulaires (A, B) et les axes linéaires (X, Y, Z) pour arrondir les profils de vitesse.
